# EUROPEAN PATENT SPECIFICATION

(11) **EP 1 816 358 B1**
(45) Date of publication and mention of the grant of the patent: **04.09.2013**
(21) Application number: 05805236.6
(22) Date of filing: 27.10.2005
(51) Int. Cl.: F16B 5/02, F16B 33/02

(54) **SHAPE OF SCREW AND SCREW PART HAVING THE SAME**
FORM FÜR SCHRAUBE UND SCHRAUBENTEIL DAMIT
FORME DE VIS ET PARTIE DE VIS AYANT CELLE-CI

(30) Priority: 29.10.2004 JP 2004315413
(43) Date of publication of application: 08.08.2007
(73) Proprietor: Yamawa Mfg. Co., Ltd., Chuo-ku Tokyo 104-0031 (JP); Yamawa Taps Co., Ltd., Yamagata 992-0057 (JP); Yamawa Precision Co., Ltd., Fukushima, 960-8057 (JP); Yamawa Engineering Co., Ltd., Fukushima, 960-8057 (JP)
(72) Inventor: WATANABE, Yoshio, Chuo-ku, Tokyo 104-0031 (JP); MITSUI, Masao, Chuo-ku, Tokyo 104-0031 (JP); NAKAYAMA, Fumitoshi, c/o YAMAWA MFG.CO., LTD., Chuo-ku, Tokyo 104-0031 (JP)
(74) Representative: Henkel, Breuer & Partner
(86) International application number: PCT/JP2005/019819
(87) International publication number: WO 2006/046660

(56) References cited:
- JP-A- 4 092 107
- JP-A- 11 025 619
- JP-A- 2002 089 526

## Description

The present invention relates to a threaded fastener for fastening, specifically relates to a shape of screw thread of easy to tighten and hard to loosen "minute multi-start thread" shape for fastening thin-sheets or thin-walled parts, and further relates to a threaded fastener having the same shape of the screw thread.

### Background Art

A "triangular screw thread " is defined as "The generic term used to refer to screw threads in which the profiles of ridges of screw threads are close to an equilateral triangle. A metric thread, unified thread and miniature screw thread belong to this triangular screw thread." according to JIS (Japanese Industrial Standards) B 0101 "Screw threads and fasteners - Vocabulary".

Also, a "coarse screw thread" is defined as the "triangular screw thread having a generic combination of diameter and pitch and most commonly used." according to JIS B 0101 "Screw threads and fasteners - Vocabulary ".

The following explanation of the present invention is of the "metric thread", which is the most common of triangular screw threads, but the present invention may be applied likewise to all kinds of screw threads other than the "metric thread".

Amongst the threaded fasteners for general purposes, the fastener having an external thread can be classified broadly into a "machine screw" and a "bolt", but as for the minor diameter fasteners relevant to the present invention, fasteners such as "JIS B 1101 slotted head machine screw"(see Japanese Standards Association's JIS B 1101 "slotted head machine screw" for reference ) and "JIS B 1111 cross-recessed head screw" (see Japanese Standards Association's JIS B 1111 "cross-recessed head screw" for reference) are known.

### Disclosure of the Invention

### Problems to be solved by the Invention

In the conventional standards of machine screws such as the JIS B 1101 and JIS B 1111, only the combination of nominal diameter and pitch of the metric coarse thread is defined.

Meanwhile, as in the fastening of screw thread, considering the stability and strength, generally, it is said that a number of engaging ridges of screw threads of about 3 is at least needed. This number can be approximately derived from the thickness of a hexagon nut or from the minimum length of engagement of the metric thread.

The metric coarse thread indicates, as is well known, a thread having the combination of nominal diameter and the most coarse pitch, in which the pitch is 0.25 mm in the nominal diameter of M1, 0.4 mm in M2, 0.5 mm in M3, and 0.7 mm in M4.

Hence, supposing that at least 3 engaging ridges of screw threads are needed, considering the stability and the strength of the screw thread, sheet thickness or wall thickness of 0.75 mm in M1, 1.2 mm in M2, 1.5 mm in M3, and 2.1 mm in M4 is necessary.

However, in recent years, the tendency of lighter and more compact manufacture has spread throughout the industry, specifically this tendency is notable in the business field of IT related devices, and the fastening of screw threads in thin sheets and thin-walled parts has increased to a large extent.

Therefore, in the stage of part designing of IT related devices, it is often the case that the 3 engaging ridges of screw threads of the metric coarse thread cannot be secured. In these cases, generally, "burring (extruding)" is done for thin-sheets, and "building-up" is done for thin-walls, in order to secure 3 engaging ridges of screw threads.

However, "burring "or "building-up" are technically advanced, and complicates the construction of the parts, and increases the cost, so that if it is possible to eliminate these processes, the manufacturing efficiency can be increased and a low cost can be attained.

JP 2002 089526 A and JP 4092107 A each disclose a tapping screw with three thead starts and a flank angle of 30 or 45° and a non-circle diameter.

The object of the present invention is, for thin-sheets or thin-walled parts which otherwise cannot secure 3 engaging ridges of screw threads (3 threads), favorably solving the problems described above, and providing a shape of screw thread which is the same or advantageous in strength essential for the fastening of screw thread as compared to the case using the existing metric coarse thread with "burring" or "building-up" process, and no inferior function in the workability in fastening the screw thread and the difficulty in loosening it, as compared to the current metric coarse thread, and further, providing threaded fasteners having the same shape of screw thread.

### Means for solving the problems

The shape of screw thread according to the present invention is a shape of an internal or an external screw thread for fastening thin-sheets or thin-walled parts as defined in claim 1 or claim 2, respectively.

In other words, in order to favorably solve the problems described above, the present inventor focused on the values of the ratio (P/D) of the pitches (P) to the nominal diameters (D) in JIS standard.

The table 1 below shows the values of the ratio (P/D) of the pitches (P) to the nominal diameters (D) of the metric course thread in JIS B 0205, and it can be seen in a course thread that as the nominal diameter decreases, the value of the ratio (P/D) increases with the pitch being coarse.

**Table 1**

| D (Nominal diameter) | P (Pitch) | P/D (Ratio) | D (Nominal diameter) | P (Pitch) | P/D (Ratio) | D (Nominal diameter) | P (Pitch) | P/D (Ratio) |
|---|---|---|---|---|---|---|---|---|
| 1 | 0.25 | 0.250 | 6 | 1 | 0.167 | 42 | 4.5 | 0.107 |
| 1.1 | 0.25 | 0.227 | 8 | 1.25 | 0.156 | 45 | 4.5 | 0.100 |
| 1.2 | 0.25 | 0.208 | 10 | 1.5 | 0.150 | 48 | 5 | 0.104 |
| 1.4 | 0.3 | 0.214 | 12 | 1.75 | 0.146 | 52 | 5 | 0.096 |
| 1.6 | 0.35 | 0.219 | 14 | 2 | 0.143 | 56 | 5.5 | 0.098 |
| 1.8 | 0.35 | 0.194 | 16 | 2 | 0.125 | 60 | 5.5 | 0.092 |
| 2 | 0.4 | 0.200 | 18 | 2.5 | 0.139 | 64 | 6 | 0.094 |
| 2.2 | 0.45 | 0.205 | 20 | 2.5 | 0.125 | 68 | 6 | 0.088 |
| 2.5 | 0.45 | 0.180 | 22 | 2.5 | 0.114 | | | |
| 2.6 | 0.45 | 0.173 | 24 | 3 | 0.125 | | | |
| 3 | 0.5 | 0.167 | 27 | 3 | 0.111 | | | |
| 3.5 | 0.6 | 0.171 | 30 | 3.5 | 0.117 | | | |
| 4 | 0.7 | 0.175 | 33 | 3.5 | 0.106 | | | |
| 4.5 | 0.75 | 0.167 | 36 | 4 | 0.111 | | | |
| 5 | 0.8 | 0.160 | 39 | 4 | 0.103 | | | |

Furthermore, in the metric fine pitch thread, even though there are some exceptions, the smaller the nominal diameter becomes, the larger the ratio (P/D) becomes, and the pitch has a tendency to become more coarse. Considering this point, the reason may be that the base of the present standards of screw threads being established over 50 years ago, the screw threads were presumably standardized according to the standard in which the level of process and measurement skills of the time could guarantee. By the process and measurement skills several decades ago, the smaller diameter and finer pitch, the more difficult the processing of internal thread holes and producing of small external threads of machine screws, and for this reason, it may be presumed that the standards of the screw threads ware made so that the smaller the diameter, the larger the pitch, making the screws coarse.

As described above, the current standards of small screw threads are based on the skills of several decades ago, so that the pitches are more coarse as the diameter becomes smaller, and are no more applicable on fastening of thin- sheets or thin-walled parts of IT related devices having a strong tendency of lighter and more compact manufacture.

The shape of screw thread according to the present invention is formed, for fastening thin-sheets or thin-walled parts, with a combination of a "minute pitch thread" and a "multi-start thread", wherein the "minute pitch thread" is formed so that a value of ratio (P/D) of a pitch (P) to each of nominal diameters (D) is smaller than that of corresponding nominal diameter of coarse thread and a fine pitch thread in current various kinds of screw thread standard in order to secure the number of engaging ridges of screw threads necessary for fastening strength and hardness in loosening, and the "multi-start thread", including double-start thread in this specification, is provided to compensate a disadvantage of low workability in fastening a fastener caused by the decrease of progress per one-turn of the fastener enhanced by reducing the value of ratio (P/D) and making the pitch more minute. The present inventors call this screw thread, the "minute multi-start thread".

Moreover, the threaded fastner according to the present invention is formed to have the shape of screw thread of the present invention described above.

The following Table 2 shows an example of a set of combinations of the nominal diameter (D), the pitch (P), the value of the ratio (P/D) and the lead (L) of the shape of screw thread according to the present invention. There may be other combinations as for the nominal diameter (D), the pitch (P) and the multiple number of thread start of the "minute multi-start screw thread" in accordance with the shape of screw thread of the present invention, and in this example, the pitch of the screw thread was set to a value or an approximate value of 1/N x P, wherein N is an integer equal to or larger than 2, and P is the value of the pitch with respect to each of the nominal diameters in metric coarse thread of JIS standard, and each screw thread was made as of N times-start thread, that is the multiple number of thread start was set to N.

Moreover, the underlined parts in Table 2 are of screws having the pitch set to the approximate value of 1/N of the pitch of the metric coarse thread.

**Table 2**

| Nominal diameter (D) | Common metric thread | | | | Minute multi-start thread | | | | | | | | |
|---|---|---|---|---|---|---|---|---|---|---|---|---|---|
| | Coarse thread Fine pitch thread | | | | Multiple Number : 2 | | | Multiple Number : 3 | | | Multiple Number : 4 | | |
| | Pitch | Ratio | Pitch | Ratio | Pitch | Ratio | Lead | Pitch | Ratio | Lead | Pitch | Ratio | Lead |
| | (P) | (P/D) | (P) | (P/D) | (P) | (P/D) | (L) | (P) | (P/D) | (L) | (P) | (P/D) | (L) |
| 1 | 0.25 | 0.25 | 0.2 | 0.2 | 0.125 | 0.125 | 0.25 | 0.08 | 0.08 | 0.24 | 0.06 | 0.06 | 0.24 |
| 1.1 | 0.25 | 0.227 | 0.2 | 0.182 | 0.125 | 0.114 | 0.25 | 0.08 | 0.073 | 0.24 | 0.06 | 0.055 | 0.24 |
| 1.2 | 0.25 | 0.208 | 0.2 | 0.167 | 0.125 | 0.104 | 0.25 | 0.08 | 0.067 | 0.24 | 0.06 | 0.05 | 0.24 |
| 1.4 | 0.3 | 0.214 | 0.2 | 0.143 | 0.15 | 0.107 | 0.3 | 0.1 | 0.071 | 0.3 | 0.07 | 0.05 | 0.28 |
| 1.6 | 0.35 | 0.219 | 0.2 | 0.125 | 0.175 | 0.109 | 0.35 | 0.1 | 0.063 | 0.3 | 0.08 | 0.05 | 0.32 |
| 1.8 | 0.35 | 0.194 | 0.2 | 0.111 | 0.175 | 0.097 | 0.35 | 0.1. | 0.056 | 0.3 | 0.08 | 0.044 | 0.32 |
| 2 | 0.4 | 0.2 | 0.25 | 0.125 | 0.2 | 0.1 | 0.4 | 0.125 | 0.063 | 0.375 | 0.1 | 0.05 | 0.4 |
| 2.2 | 0.45 | 0.205 | 0.25 | 0.114 | 0.225 | 0.102 | 0.45 | 0.15 | 0.068 | 0.45 | 0.1 | 0.045 | 0.4 |
| 2.5 | 0.45 | 0.18 | 0.35 | 0.14 | 0.225 | 0.09 | 0.45 | 0.15 | 0.06 | 0.45 | 0.1 | 0.04 | 0.4 |
| 3 | 0.5 | 0.167 | 0.35 | 0.117 | 0.25 | 0.083 | 0.5 | 0.15 | 0.05 | 0.45 | 0.125 | 0.042 | 0.5 |
| 3.5 | 0.6 | 0.171 | 0.35 | 0.1 | 0.3 | 0.086 | 0.6 | 0.2 | 0.057 | 0.6 | 0.15 | 0.043 | 0.6 |
| 4 | 0.7 | 0.175 | 0.5 | 0.125 | 0.35 | 0.088 | 0.7 | 0.225 | 0.056 | 0.675 | 0.175 | 0.044 | 0.7 |
| 5 | 0.8 | 0.16 | 0.5 | 0.1 | 0.4 | 0.08 | 0.8 | 0_{.}25 | 0.05 | 0.75 | 0.2 | 0.04 | 0.8 |
| 6 | 1 | 0.167 | 0.75 | 0.125 | 0.5 | 0.083 | 1 | 0.3 | 0.05 | 0.9 | 0.25 | 0.042 | 1 |
| 8 | 1.25 | 0.156 | 1 0.75 | 0.125 | 0.6 | 0.075 | 1.2 | 0.4 | 0.05 | 1.2 | 0.3 | 0.038 | 1.2 |
| | | | | 0.094 | | | | | | | | | |
| | | | 1.25 | 0.125 | | | | | | | | | |
| 10 | 1.5 | 0.15 | 1 | 0.1 | 0.75 | 0.075 | 1.5 | 0.5 | 0.05 | 1.5 | 0.35 | 0.035 | 1.4 |
| | | | 0.75 | 0.075 | | | | | | | | | |

### The effect of the invention

Since the "minute multi-start thread" in accordance with the present invention is constituted as described above, even for thin-sheets and thin-walled parts in which 3 engaging ridges of screw threads cannot be secured in using the current metric coarse thread, by using this "minute multi-start thread", it is possible to secure 2 times the number of engaging ridges of screw threads compared to the metric coarse threads even in 2 thread start of screw thread (double-start thread) having the least number of threads in Table 2. Therefore, with the "minute multi-start thread", the fastening of screw thread becomes more stabile compared to the metric threads, and as hereinafter described, is known to be advantageous in strength. Also, in the measured result of the loosening torque after addition of vibration, as hereinafter described, the "minute multi-start thread" achieved advantageous data as compared to the metric coarse threads.

In the fastening of machine screws of metric coarse thread in the current JIS standard, when forming an internal thread in thin-sheets or thin-walled parts, "burring" must be done for thin-sheets, and "building-up" must be done for thin-walls, in order to secure 3 engaging ridges of screw threads, while by using the "minute multi-start thread" according to the shape of screw thread of the present invention, a stable fastening of screw thread becomes possible without the need of "burring" or "building-up", and the complexity in the structure of parts can be avoided. Moreover, in the case where the thickness of the walls is decided not only from the perspective of the strength of the parts but also considering the thread height after burring, by using the "minute multi-start thread" in accordance with the shape of screw thread of the present invention, the thread height can be made low, allowing the reduction of the wall-thickness of the parts themselves, and the reduction of material cost can be attained.

Further, as for the shape of screw thread of the present invention, the pitch of the screw thread may be set to a value equivalent to 1/N x P, wherein N is an integer equal to or larger than 2, and P is the value of the pitch with respect to each of the nominal diameters of coarse screw thread of one of the various kinds of screw thread standard, and the multiple number of thread start may be said N. When the multiple number of thread start of screw thread is made N in the above mentioned manner, with for example the pitch being set to a value equivalent to 1/N (N being an integer equal to or larger than 2) of the pitch P of metric course thread in current JIS standard, the lead of the shape of screw thread of the present invention becomes the same as metric course thread in JIS standard, so that the disadvantage of efficiency loss in the workability while fastening the screw thread caused by the pitch miniaturization by comparison to the threaded fasteners of metric coarse threads, can be resolved.

In fastening of minor diameter threaded fasteners, when fastening machine screws or bolts using air motor driven or electric motor driven screw drivers, troubles often occur, in which the external thread bites into the threaded hole at an angle so that the screw threads are damaged, while by adopting the "minute multi-start thread" according to the shape of screw thread of the present invention, because of the multi-start thread, the internal thread has a multiple inlets for the multiple threads of external thread, so that the insertion of the external thread is stabilized and the aforesaid damaging trouble can also be solved.

### Brief description of the drawings

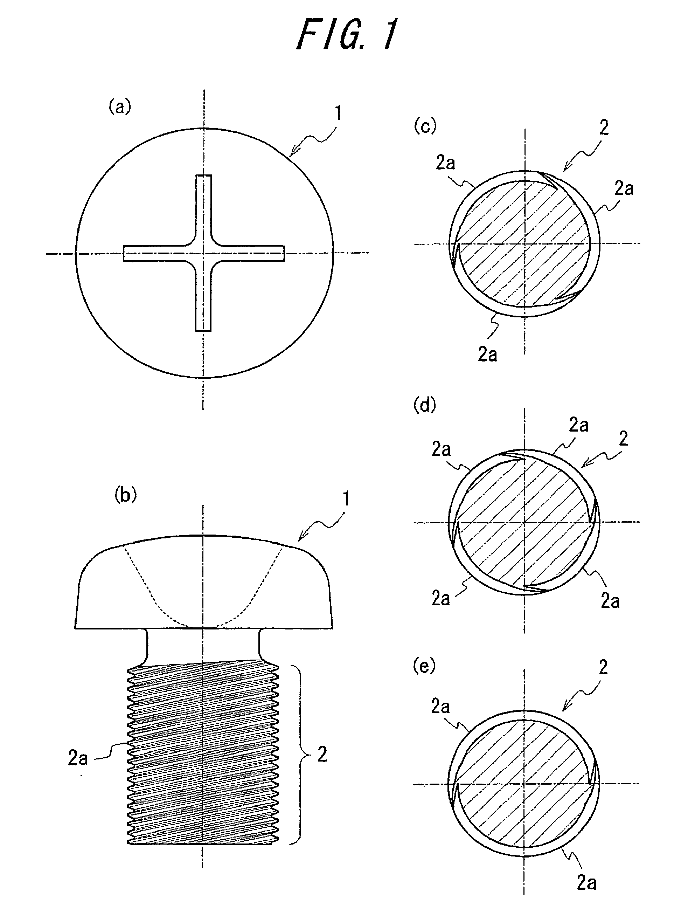

Fig.1 (a), (b) and (c) are a plan view, an elevational view, and a cross-sectional view respectively of a machine screw having the first embodiment of the "minute multi-start thread " according to the shape of screw thread of the present invention. Further, Fig.1 (d) and (e) are cross-sectional views of a machine screw having the second and third embodiment of the "minute multi-start thread" according to the shape of screw thread of the present invention;

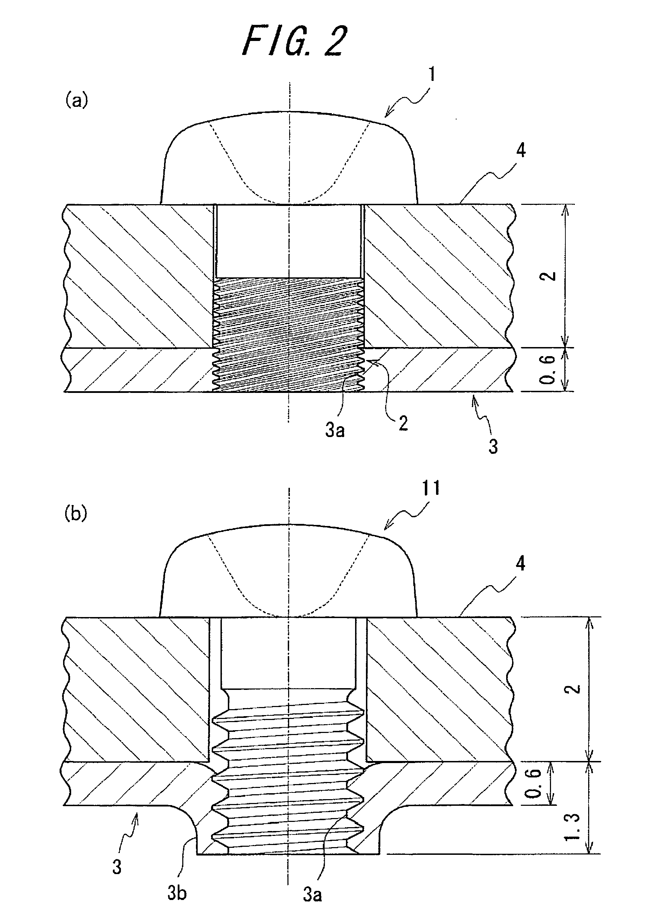

Fig.2 (a) is a cross-sectional view showing the using condition in a case where a part is fastened to a thin wall with a machine screw having the first embodiment of the "minute multi-start thread", and (b) is a cross-sectional view showing the using condition in a case where a part is fastened to a thin wall with a machine screw of the conventional coarse thread;

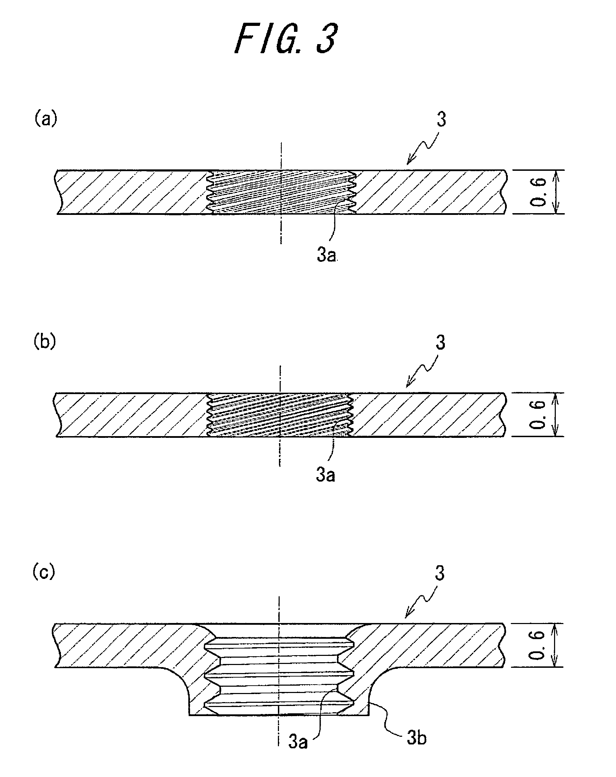

Fig.3 (a) and (b) are cross-sectional views showing a state in which a 3 thread start (triple-start thread) type internal thread of 2 mm nominal diameter x 0.125 mm pitch having the shape of the first embodiment of "minute multi-start thread" and a 4 thread start (quadruple-start thread) type internal thread of 2 mm nominal diameter x 0.1 mm pitch having the first embodiment of "minute multi-start thread" are cut for over 3 ridges of the threads respectively in a thin sheet of 0.6 mm thickness, and Fig.3 (c) is a cross-sectional view showing a state in which an internal thread of coarse thread M2 x 0.4 mm pitch is cut for about 3 ridges of the thread in a thin sheet of 0.6 mm thickness with burring.

### Best Mode for carrying out the Invention

The embodiments of the present invention will be described below in detail with reference to the drawings. Here, Fig.1 (a), (b) and (c) are a plan view, an elevational view, and a cross-sectional view respectively of a machine screw having the first embodiment of the "minute multi-start thread" according to the shape of screw thread of the present invention, and this machine screw 1 is a cross-recessed head machine screw having a straight thread, and the multiple number of thread start of thread 2a of threaded portion 2 is 3 (that is of triple-start thread type). Further, Fig.1 (d) and (e) are cross-sectional views of the machine screw having the second and third embodiments of the "minute multi-start thread" according to the shape of screw thread of the present invention, and these second and third embodiments differ from the first embodiment only in that the multiple number of thread start of threads 2a are 4 and 2 respectively. Moreover, these first to third embodiments are characterized in that they are each a "minute pitch thread" as well as a "multi-start thread", and as for the nominal diameter, it is not limited to the examples described below. Furthermore, these shapes of screw thread of the first to third embodiments are not only shapes for external threads as in Fig. 1, but also include those for internal threads. The cross sectional shape of the screw threads in Fig.1 (c), (d), (e) are lead rectangular cross-sections seen from the axial direction.

Fig.2 (a) is a cross-sectional view showing the using condition in a case where a part 4 is fastened to a thin sheet 3 with a machine screw 1 having the first embodiment of the "minute multi-start thread", and the machine screw 1 fastened to the internal thread 3a formed in the thin sheet 3 can fix the part 4, so that the burring process is unnecessary. At the same time, Fig.2 (b) is a cross-sectional view showing the using condition in a case where a part 4 is fastened to a thin sheet 3 with a machine screw 11 of the conventional coarse thread, and the internal thread 3a is formed in a thin sheet 3 in which the burring part 3b has been worked by a burring process, and the machine screw 11 fastened to this internal thread 3a fixes the part 4.

Here, taking for example a screw of 2 mm nominal diameter, since the metric coarse thread M2 has a pitch of 0.4 mm, when assuming that at least 3 engaging ridges of screw threads are required, at least 1.2 mm in the case of sheet thickness is required, and if the sheet is thinner than 1.2 mm, for example 0.6 mm, as shown in Fig.3 (c) as a cross-sectional view, the burring part 3b of thin-sheet 3 must be worked by a burring process. As compared with this, for example, the first embodiment of the "minute multi-start thread" has a pitch of 0.125 mm, which enables 4.8 engaging ridges of screw threads to be processed in a thin-sheet of 0.6 mm thickness as shown in Fig.3 (a), and the 4 thread start type screw thread of the second embodiment of the "minute multi-start thread" has a pitch of 0.1 mm, which enables 6 engaging ridges of screw threads to be processed in a thin-sheet of 0.6 mm thickness as shown in Fig.3 (b), and in both embodiments the burring process is unnecessary.

Moreover, as for the required time for fastening the screw, for example in the first embodiment of 3 thread start type screw thread having a pitch of 0.125 mm, the lead is 0.375 mm which is slightly shorter than that of the coarse thread, and takes up a minute amount of extra time to be precise, but there is no substantial difference as compared to the coarse thread. At the same time, in the second embodiment of 4 thread start type screw thread having a pitch of 0.1 mm, the lead is the same as the coarse thread, and can be fastened in the same time as the coarse thread.

Further, as for the workability in screwing, the multi-start thread has multiple inlets for the multiple thread start of external thread so that the insertion of the external thread is facilitated, and can be said that it is advantageous as compared to a single-start thread.

Furthermore, the inventors carried out the following experiment on the static tension strength of the screw, which is a guide for determining its fastening strength. Specifically, the sheet thickness was 0.8 mm, in which a single-start thread type internal thread of M2 coarse thread x pitch 0.4 mm and the third embodiment of 2 thread start (double-start thread) type internal thread of M2 x pitch 0.2 mm were processed, and with the external threads each screwed to the internal threads, the external threads were pulled to the axial direction and the breaking force of the internal threads were measured. As a result, the breaking force of the third embodiment of 2 thread start type M2 x 0.2 was 106% of that of the single-start thread type M2 x 0.4. Therefore, according to the third embodiment of the "minute multi-start thread", it has been revealed that a stable strength can be secured, even with a sheet thickness unable to secure 3 engaging ridges of screw threads in the pitch of coarse thread.

Moreover, the inventors carried out the following experiment on the looseness test at the time of fastening the screw. Specifically, in relation to the looseness test device, a single-start thread type internal thread of M10 (not M2) coarse thread x pitch 1.5 mm and the first embodiment of said 3 thread start (triple-start thread) type internal thread of M10 x pitch 0.5 mm were processed in a S50C plate of 3 mm thickness, and with the corresponding external threads each screwed to the internal threads by a torque value lower than the elasticity inflection point (yield point), and after placing it on a vibration exciter for a certain time, the torque at the time of screw loosening was measured with a torque wrench. As a result, the loosening torque of the first embodiment of 3 thread start type M10 x 0.5 was 115% of that of the single-start thread type M10 x 1.5. The same relationship can be applied to other nominal diameters, and therefore, it has been revealed that the "minute multi-start thread" has an equal or surpassing loosening torque as compared to the coarse pitch single-start thread.

The above explanations were given based on the embodiments shown in the drawings, but the present invention is not limited to the embodiments and may be modified for convenience in the scope described in the Claims. The shape of screw thread of the present invention is not limited to that of the embodiments corresponding to the metric coarse thread in JIS standard, and may be corresponding to the coarse thread in other standards. Moreover, the fastener of the present invention is not limited to that of the machine screw of said embodiments.

### Industrial Applicability

Thus, according to the "minute multi-start thread" of the present invention, the burring process, which was conventionally fundamental in thin-sheets in relation to the usage of coarse threads, becomes unnecessary and a large reduction in cost can be provided. Moreover, as for the function of the screw thread, a function by no means inferior compared to the conventional coarse thread can be secured.

## Claims

1. A shape of an internal screw thread of a straight thread with multiple thread starts for fastening thin-sheets or thin-walled parts wherein
the screw thread is a triangular screw thread in which the profiles of the ridges of the screw threads are close to an equilateral triangle,
the number of thread starts N is set to 2, 3 or 4, and the value of the ratio P/D of a pitch P to a nominal diameter D of the screw thread is reduced to 1/N of the value of that ratio of a pitch to a corresponding nominal diameter of a coarse thread according to the metric, the unified or the miniature screw thread standard.

2. A shape of an external screw thread of a straight thread with multiple thread starts for fastening thin-sheets or thin-walled parts wherein
the screw thread is a triangular screw thread in which the profiles of the ridges of the screw threads are close to an equilateral triangle,
the number of thread starts N is set to 2, 3 or 4, and the value of the ratio P/D of a pitch P to a nominal diameter D of the screw thread is reduced to 1/N of the value of that ratio of a pitch to a corresponding nominal diameter of a coarse thread according to the metric, the unified or the miniature screw thread standard.

3. A threaded fastener comprising an internal screw thread formed to have the shape of screw thread according to claim 1 and a complementary external screw thread formed to have the shape of screw thread according to claim 2.

## Patentansprüche

1. Eine Form eines Schraubeninnengewindes eines zylindrischen Gewindes mit mehreren Gewindegängen zum Befestigen dünner Platten oder dünnwandiger Teile, wobei
das Schraubengewinde ein dreieckiges Schraubengewinde ist, in welchem die Profile der Rippen der Schraubengewinde einem gleichseitigen Dreieck angenähert sind,
die Anzahl der Gewindegänge N auf 2, 3 oder 4 eingestellt ist, und
der Wert des Verhältnisses P/D einer Teilung P zu einem nominalen Durchmesser D des Schraubengewindes auf 1/N des Wertes dieses Verhältnisses einer Teilung zu einem korrespondierenden nominalen Durchmesser eines metrischen Regel- bzw. Grobgewindes nach der metrischen Norm, dem "Unified Thread Standard" oder der Miniatur-Schraubengewindenorm reduziert ist.

2. Eine Form eines Schraubenaußengewindes eines zylindrischen Gewindes mit mehreren Gewindegängen zum Befestigen dünner Platten oder dünnwandiger Teile, wobei
das Schraubengewinde ein dreieckiges Schraubengewinde ist, in welchem die Profile der Rippen der Schraubengewinde einem gleichseitigen Dreieck angenähert sind,
die Anzahl der Gewindegänge N auf 2, 3 oder 4 eingestellt ist, und
der Wert des Verhältnisses P/D einer Teilung P zu einem nominalen Durchmesser D des Schraubengewindes auf 1/N des Wertes dieses Verhältnisses einer Teilung zu einem korrespondierenden nominalen Durchmesser eines metrischen Regel- bzw. Grobgewindes nach der metrischen Norm, dem "Unified Thread Standard" oder der Miniatur-Schraubengewindenorm reduziert ist.

3. Eine Verschraubung mit einem Schraubeninnengewinde, welches mit der Form eines Schraubengewindes gemäß Anspruch 1 ausgebildet ist, und einem komplementären Schraubenaußengewinde, welches mit der Form eines Schraubengewindes gemäß Anspruch 2 ausgebildet ist.

## Revendications

1. Forme de filetage intérieur d'un filet droit ayant de multiples entrées de filet pour fixer des feuilles minces ou des parties à parois minces, dans laquelle
le filetage est un filetage triangulaire dans lequel les profils des crêtes des filetages sont proches d'un triangle équilatéral,
le nombre d'entrées de filet N est défini sur 2, 3 ou 4, et
la valeur du rapport P/D d'un pas P en fonction d'un diamètre nominal D du filetage est réduit à 1/N de la valeur de ce rapport d'un pas en fonction d'un diamètre nominal correspondant d'un filet normal selon la norme de filetage métrique, unifié ou miniature.

2. Forme de filetage extérieur d'un filet droit ayant de multiples entrées de filet pour fixer des feuilles minces ou des parties à parois minces, dans laquelle
le filetage est un filetage triangulaire dans lequel les profils des crêtes des filetages sont proches d'un triangle équilatéral,
le nombre d'entrées de filet N est défini sur 2, 3 ou 4, et
la valeur du rapport P/D d'un pas P en fonction d'un diamètre nominal D du filetage est réduit à 1/N de la valeur de ce rapport d'un pas en fonction d'un diamètre nominal correspondant d'un filet normal selon la norme de filetage métrique, unifié ou miniature.

3. Élément de fixation fileté comprenant un filetage intérieur formé de façon à présenter la forme d'un filetage selon la revendication 1 et un filetage extérieur complémentaire formé de façon à présenter la forme d'un filetage selon la revendication 2.
